# EUROPÄISCHE PATENTSCHRIFT

(11) **EP 0 712 551 B1**
(45) Veröffentlichungstag und Bekanntmachung des Hinweises auf die Patenterteilung: **22.10.1997**
(21) Anmeldenummer: 94922844.9
(22) Anmeldetag: 05.08.1994
(51) Int. Cl.: H04B 7/26, H04Q 7/24

(54) **UNIVERSELLES MOBIL-TELEKOMMUNIKATIONSSYSTEM**
UNIVERSAL MOBILE TELECOMMUNICATIONS SYSTEM
SYSTEME DE TELECOMMUNICATIONS MOBILE UNIVERSEL

(30) Priorität: 06.08.1993 DE 4326523
(43) Veröffentlichungstag der Anmeldung: 22.05.1996
(73) Patentinhaber: Siemens Aktiengesellschaft, 80506 München (DE)
(72) Erfinder: PILLEKAMP, Klaus-Dieter, Dipl.-Ing., D-40699 Erkrath (DE); TASTO, Manfred, Dr.-Ing., D-46397 Bocholt (DE)
(86) Internationale Anmeldenummer: DE9400910
(87) Internationale Veröffentlichungsnummer: WO9505040

(56) Entgegenhaltungen:
- GB-A- 2 234 649
- US-A- 4 549 293
- COMMUNICATION & TRANSMISSION, Bd.15, 1993, PARIS,FR; Seiten 109 - 121, XP396196 A.CHARBONNIER 'Perspectives for mobile communications'
- IEEE COMMUNICATIONS MAGAZINE, Bd.30, Nr.12, Dezember 1992, NEW-YORK,US; Seiten 54 - 62, XP330090 STANLEY CHIA 'The Universal Mobile Telecommunication System'

## Beschreibung

Die Erfindung betrifft ein universelles Mobil-Telekommunikationssystem gemäß dem Oberbegriff des Patentanspruches 1.

Die moderne Mobilkommunikation, z. B. Mobil-Telekommunikation zur Übertragung von Sprache, Daten, Text, Grafik, Fest- und Bewegtbild, wird analog zu der stationären Kommunikation (z. B. ISDN-Kommunikationssystem; Integrated Services Digital Network) in einen privaten und öffentlichen Bereich unterteilt. Darüber hinaus unterscheidet man bei der Mobil-Telekommunikation (erste und zweite Generation) zwischen einer Zellular- und Schnurlos-Telekommunikation. Die Schnurlos-Telekommunikation stützt sich dabei bisher im wesentlichen auf Schnurlos-Telekommunikationssysteme für Heim- und Büroanwendungen, während die Zellular-Telekommunikation vorwiegend durch den Einsatz von Mobilfunk-Telekommunikationssystemen bestimmt wird.

Für die vorstehend genannten Mobilkommunikationssysteme, insbesondere solche der zweiten Generation, wird überwiegend ein TDMA-Verfahren (Time Division Multiple Access) für den Zugriff und das Multiplexen der zu übertragenden Signale verwendet. Für zukünftige Mobil-Telekommunikationssysteme (z. B. dritte Generation) wird aber auch das CDMA-Übertragungsverfahren (Code Division Multiple Access) nicht zuletzt wegen des zu erwartenden Einsatzes von zellenorientierten Übermittlungsverfahren (ATM-Verfahren; Asynchronus Transfer Mode) an Bedeutung gewinnen. Dies liegt daran, daß für ein immer größeres Angebot von Kommunikations- und Informationsdiensten bei gleichzeitig steigenden Anforderungen an die Qualität und Menge der zu übertragenden Bitraten neben den Zugriffs- und Multiplexverfahren die optimierte Signalcodierung, Kanalcodierung für eine flexible Luftschnittstelle eine immer größere Rolle spielen wird.

Das TDMA- als auch das CDMA-Übertragungsverfahren bilden dabei letztlich die Grundlage für die verschiedenen Systemstandards bei der mobilen Telekommunikation. Hinsichtlich des TDMA-Verfahrens sind die gegenwärtig auf dem Markt eingeführten Schnurlos-Telekommunikationssysteme unter anderem nach dem digitalen paneuropäischen DECT-Standard (Digital European Cordless Telecommunication) und dem digitalen CT2-Standard (Cordless Telephone 2) aufgebaut, während die Mobilfunk-Telekommunikationssysteme nach dem weltweiten GSM-Standard (Groupe Spéciale Mobile; Global System for Mobile Communications) aufgebaut sind.

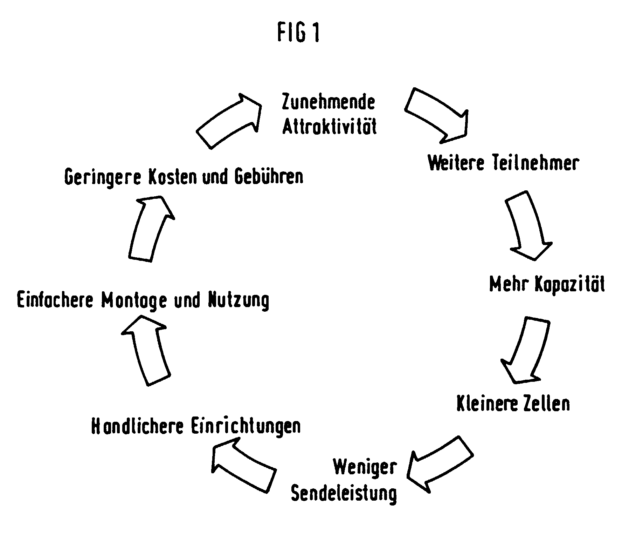

Die Weiterentwicklung der Mobilkommunikation in einer Wirkungsspirale nach Figur 1 (Telcom Report 15; 1992; Heft 2, Seiten 57 bis 59) wird zu der bereits angesprochenen dritten Generation von Mobil-Telekommunikationssystemen führen, bei denen die bisherige Trennung zwischen Zellular- und Schnurlos-Telekommunikation aufgehoben ist. Diese dritte Generation der Mobil-Telekommunikation zeichnet sich durch eine universelle (zeitlich und örtlich) Mobilität aus, bei der jeder Kommunikationsteilnehmer überall und jederzeit erreichbar sein wird. Bei dieser universellen Mobilität unterscheidet man zwischen einer gerätebezogenen Mobilität über Luftanschlüsse und einer personenbezogenen Mobilität über Luft- und Kabelanschlüsse. Die Einbeziehung beider Aspekte in eine universelle Mobilkommunikation führt zu einer "Advanced Mobility" mit einem universellen mobilen Telekommunikationssystem (UMTS = Universal Mobile Telecommunication System) in Verbindung mit einer universellen persönlichen Telekommunikation (UPT = Universal Personal Telecommunication). Das universelle mobile Telekommunikationssystem (UMTS) benötigt dabei sowohl flexible Luftschnittstellen als auch eine intelligente Netzinfrastruktur. Durch eine solche Systemstruktur ist es gewährleistet, daß zum einen mobile Teilnehmer mit unterschiedlichen Geschwindigkeiten und Verkehrsdichten miteinander kommunizieren können und zum anderen eine Vielzahl von Telekommunikations- und Nachrichtendiensten (Informationsdiensten) mit hoher Qualität und Kapazität angeboten werden kann.

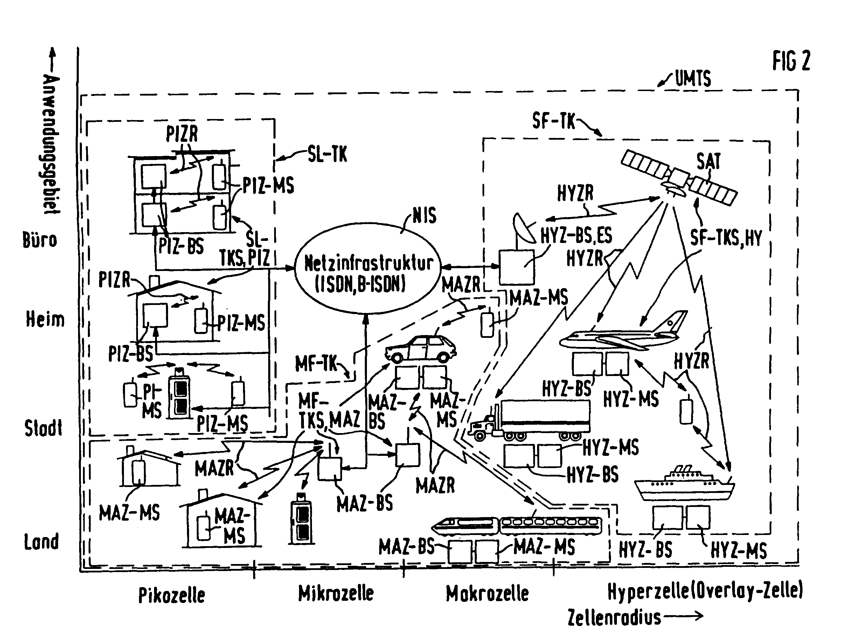

In Figur 2 ist ausgehend von der Druckschrift Telcom Report 15; 1992; Heft 2, Seiten 60 bis 63 ein Szenario "Universelle Mobilkommunikation - Advanced Mobility" mit den verschiedenen Anwendungsfällen in bezug auf den Zellenradius dargestellt. Der Aufbau des universellen mobilen Telekommunikationssystems (UMTS) unterteilt sich danach für die Anwendungsbereiche (Büro, Heim, Stadt und Land) in unterschiedliche Kommunikationszellen. Diese Zellen können dabei zwei(Land, Stadt) oder dreidimensional (Gebäude) miteinander verknüpft sein. Nach der Darstellung in Figur 2 sind die verschiedenen Arten der mobilen Telekommunikation (Schnurlos-, Mobilfunk- und Satelliten-Telekommunikation SL-TK, MF-TK, S-TK) in Abhängigkeit des Zellenradius separat oder in einer Mischform dargestellt.

Die Schnurlos-Telekommunikation SL-TK findet in ihrer reinen, separaten Form für Büro- und Heimanwendungen im Pikozellenbereich statt. In diesem Pikozellenbereich - mit einem Pikozellenradius PIZR von bis zu 200 m (Übertragungsreichweite) - ist mindestens eine Pikozelle PIZ mit einem Schnurlos-Telekommunikationssystem SL-TKS vorhanden. Das Schnurlos-Telekommunikationssystem SL-TKS besteht dabei aus einer pikozellenindividuellen Basistation PIZ-BS (Schnurlos-Basisstation) und mindestens einer der Basisstation PIZ-BS zugeordneten pikozellenindividuellen Mobilstation PIZ-MS (Schnurlos-Mobilstation). Wenn - wie vorstehend und im folgenden - Begriffe mit der Endung "zellenindividuell/e/en" im Zusammenhang mit einem Gegenstand/einer Tätigkeit/einer Eigenschaft verwendet werden, dann ist damit der Gegenstand/die Tätigkeit/die Eigenschaft gemeint, der/die einer Zelle (z. B. einer Piko-, Mikro-, Makro- und Hyperzelle) eigen ist bzw. zu einer Zelle gehört.

Die Mobilfunk-Telekommunikation MF-TK findet in ihrer reinen, separaten Form für Stadt- bzw. Landanwendungen in stationären Gütern (z. B. Gebäuden) und/oder in dynamischen, beweglichen Gütern (z. B. Auto, Zug etc.) im Makrozellenbereich statt. In diesem Makrozellenbereich - mit einem Makrozellenradius MAZR von z. B. bis zu 20 km (Übertragungsreichweite) -, der den Pikozellenbereich mit der Pikozelle PIZ und einen Mikrozellenbereich mit mindestens einer Mikrozelle MIZ umfaßt, ist mindestens eine Makrozelle MAZ mit einem Mobilfunk-Telekommunikationssystem MF-TKS vorhanden. Dieses Mobilfunk-Telekommunikationssystem MF-TKS besteht dabei aus einer makrozellenindividuellen Basisstation MAZ-BS (Mobilfunk-Basisstation), die stationär oder mobil (z. B. Auto, Zug) aufgebaut sein kann, und mindestens einer der Basisstation MAZ-BS zugeordneten makrozellenindividuellen Mobilstation MAZ-MS (Mobilfunk-Mobilstation).

Als Ergänzung zur Schnurlos- und Mobilfunk-Telekommunikation SL-TK, MF-TK findet die Satelliten-Telekommunikation SF-TK in einem Hyperzellenbereich statt. In diesen Hyperzellenbereich - mit einem Hyperzellenradius HYZR von mehreren hundert Kilometern (Übertragungsreichweite) - ist mindestens eine Hyperzelle HYZ mit einem Satelliten-Telekommunikationssystem SF-TKS vorhanden. Dieses Satelliten-Telekommunikationssystem SF-TKS beteht dabei aus einem z. B. auf der geostationären Erdumlaufbahn positionierten Satelliten SAT einer hyperzellenindividuellen Basisstation HYZ-BS, die stationär als Erdstation ES oder mobil als Mobil-Erdstation MES (z. B. im Flugzeug, Schiff, Lkw etc.) aufgebaut sein kann, und mindestens einer der Basistation HYZ-BS zugeordneten hyperzellenindividuellen Mobilstation HYZ-MS.

Bei der Mischform aus den drei vorstehend genannten Arten der mobilen Telekommunikation wird beispielsweise für die Realisierung des "Advanced Mobility"-Konzeptes innerhalb des universellen mobilen Telekommunikationssystems (UMTS) eine Netzinfrastruktur NIS (ISDN = Integrated Services Digital Network, B-ISDN = Breitband-Integrated Services Digital Network) verwendet.

Bei dieser Netzinfrastruktur NIS handelt es sich beispielsweise um ein Schmalband- oder Breitband-ISDN-Kommunikationssystem. In der Druckschrift Telcom Report 8; 1985; Sonderheft mit dem Titel "Diensteintegrierendes Digitalnetz ISDN" - Ganzes Dokument - ist ein Schmalband-ISDN-Kommunikationssystem und in den Druckschriften Telcom Report 14; 1991; Sonderheft mit dem Titel "Telcom 91" - Seiten 12 bis 19 ("Vision ONE - Optimierte Netz-Evolution") - sowie Telcom Report 14; 1991; - Seiten 36 bis 39 ("Grundsteine für schnelleren B-ISDN-Aufbau"), Seiten 40 bis 43 ("Breitband-ISDN ante portas"), Seiten 258 bis 261 ("Schrittmacher für bitratenvariable Breitbandkommunikation") - ein Breitband-ISDN-Kommunikationssystem beschrieben.

Diese Netzinfrastruktur NIS ist mit den pikozellenindividuellen Basisstationen PIZ-BS des Schnurlos-Telekommunikationssystems SL-TKS, den makrozellenindividuellen Basisstationen MAZ-BS des Mobilfunk-Telekommunikationssystems MF-TKS und/oder über die stationäre Erdfunkstelle ES mit dem Satelliten SAT des Satelliten-Telekommunikationssystems SF-TKS bidirektional verbunden.

Um ein solches in der Figur 2 dargestelltes und vorstehend beschriebenes universelles mobiles Telekommunikationssystem UMTS installieren zu können, müssen jedoch noch eine Reihe von Problemen gelöst werden.

Diese Reihe von Problemen betrifft
- Einführungskonzepte (z. B. notwendige technische Kompatibilität bzw. Zusammenarbeit mit vorhandenen Systemen und Netzen im Hinblick auf eine Flächendeckung, Nutzungsumfang, mögliche Kommunikations- und Informationsdienste etc.);
- ein langfristiges Konzept mit harmonischer Integration oder komplexen "Interworking" in einem Multi-System- oder Multi-Betreiber-Szenario;
- mögliche Substitutionen (z. B. zwischen Leitungs- und Luftanschlüssen oder zwischen UPT und UMTS);
- Nutzen von Synergie-Effekten in Entwicklung und Fertigung;
- eine mögliche Verzögerung und Beeinflussung des universellen mobilen Telekommunikationssystems (UMTS) durch ständige Verbesserungen bei den Systemen der zweiten Generation (Advanced GSM, Advanced DECT);
- technische, rechtliche, politische, gesellschaftliche Unsicherheiten (z. B. Zusammenarbeit verteilter Datenbanken, künftige Frequenzzuordnung, mögliche Beeinträchtigung der Gesundheit durch Funk).

Bei dieser Vielzahl von Problemen scheint eine evolutionäre Weiterentwicklung des universellen mobilen Telekommunikationssystems (UMTS) wahrscheinlich zu sein. Im Zuge dieser evolutionären Weiterentwicklung werden die zellulare interaktive Telekommunikation (Mobilfunk) und die schnurlose interaktive Telekommunikation (Schnurlos-Technologie) schrittweise bis hin zu einer universellen Mobilkommunikation (UMTS) mit "Advanced Mobility" vorangetrieben.

Wenn im folgenden von einem universellen Mobil-Telekommunikationssystem gemäß der Darstellung in Figur 2 die Rede ist, so ist damit u. a. ein Telekommunikationssystem gemeint, das
- auf verschiedenen Zugriffs-, Multiplex-, Codier- und Modulationsverfahren (TDMA- und CDMA-Verfahren) basiert,
- sich auf den Einsatz des zellenorientierten Übermittlungsverfahrens (ATM = Asynchronous Transfer Mode) in der Netzinfrastruktur NIS stützt,
- für verschiedene Telekommunikations-Standards (DECT, GSM, Advanced DECT, Advanced GSM) anwendbar ist und
- für verschiedene Kommunikations- und Nachrichten/Informationsdienste (z. B. Sprachdialog, Informationsübertragung in Form von Daten, Text und Bild sowie Notruf-, Ortungs- und Navigationsdienste) brauchbar ist.

Aus der EP 0 418 096 A2 ist ein zellulares Mobilfunksystem (Makrozelle) bekannt, das in mehrere Subzellen (Pikozellen) unterteilt ist. Jeder dieser Subzellen ist eine Duplex-Repeaterstation zugeordnet, durch die eine makrozellenindividuelle Funkverbindung zwischen einer makrozellenindividuellen Basisstation und einem den Subzellen jeweils zugeordneten Kleinleistungs-Mobilteil aufgebaut werden kann. Die Duplex-Repeaterstation hat dabei die Aufgabe, von den Kleinleistungs-Mobilteilen zu der makrozellenindividuellen Basisstation übertragene Funksignale zu empfangen, umzusetzen und zu verstärken sowie von der makrozellenindividuellen Basisstation an die Kleinleistungs-Mobilteile übertragene Funksignale zu empfangen, umzusetzen und zu bedämpfen (Aufgaben eines Transponders).

Aus der dem Anmeldungsgegenstand am nächsten kommenden US-4,748,655 sind tragbare Telefone bekannt, die über eine Vielzahl von verschiedenen Netzkopplungseinrichtungen (Gateways), wie z. B. gemeinsame Funkeinheiten, Funktelefone, Schnurlostelefone oder private Nebenstellenanlagen, an ein zellulares Funknetzwerk angeschlossen werden können. Darüber hinaus kann das tragbare Telefon auch als Funkrufempfänger innerhalb des zellularen Funknetzwerkes verwendet werden. Der Benutzer eines solchen multifunktionalen Telefons kann somit, ohne ein für die Telekommunikation in dem zellularen Funknetzwerk erforderliches Funktelefon zu besitzen, an der Netzwerktelekommunikation teilnehmen. Diese Teilnahme wird dabei durch die verschiedenen Netzkopplungseinrichtungen sichergestellt. Von den verschiedenen Netzkopplungseinrichtungen ist insbesondere die als Mehrkanalanordnung ausgebildete gemeinsame Funkeinheit in der Lage, eine Vielzahl der genannten multifunktionalen Telefone innerhalb eines gegenüber den Zellen des Funknetzwerkes kleineren, begrenzten Bereiches zu bedienen. Die vorzugsweise transportabel ausgebildete und z. B. in öffentlichen Bereichen wie Bahnhöfen, Flughäfen, Zügen oder Bussen eingesetzte gemeinsame Funkeinheit dient zu den genannten Telekommunikationszwecken ausschließlich als Verbindungs- und Umsetzungseinheit zwischen einer dem zellularen Funknetzwerk zugeordneten Basisstation und den multifunktionalen Telefonen. Die Wirkungsweise der gemeinsamen Funkeinheit entspricht somit einem Transponder, wie er beispielsweise aus der Satellitentechnik bekannt ist.

Aus der US-4,759,051 ist ein zellulares Funktelefonsystem bekannt, bei dem ein geografischer Funkbereich mit einer zentralen Zellenstation in mehrere Funkzellen unterteilt ist. Jede dieser Funkzellen enthält einen Transponder, wobei der Transponder auf der Funkstrecke zwischen tragbaren Funkeinheiten und der Zellstation die zu übetragenden Funksignale aufnimmt, verstärkt und wieder abgibt.

In der IEEE Communications Magazine 30, Dez. 1992, No. 12, Seiten 54 bis 62 werden Konzeption und Voraussetzungen eines universellen Mobil-Telekommunikationssystems (UMTS) für die dritte System-Generation der mobilen Telekommunikation erläutert.

Die der Erfindung zugrundeliegende Aufgabe besteht darin, ein universelles Mobil-Telekommunikationssystem anzugeben, bei dem im Zuge der Weiterentwicklung der mobilen Telekommunikation gemäß der Wirkungsspirale nach Figur 1 ein pikozellenindividuelles Schnurlos-Telekommunikationssystem auf Kommunikationszellen mit unterschiedlichen Zellenradien (universell) erweitert werden kann.

Diese Aufgabe wird ausgehend von dem in dem Oberbegriff des Patentanspruches 1 definierten universellen mobilen Telekommunikationssystem durch die in dem kennzeichnenden Teil des Patentanspruches 1 angegebenen Merkmale gelöst.

Der wesentliche Vorteil des erfindungsgemäßen universellen Mobil-Telekommunikationssystems liegt darin, daß ein auf Kommunikationszellen mit unterschiedlichen Zellenradien erweitertes Schnurlos-Telekommunikationssystem in dem erweiterten Schnurlosbereich mit einer geringeren Sendeleistung für Schnurlos-Mobilstationen auskommt und dadurch die Belastung eines Benutzers der Schnurlos-Mobilstation durch elektromagnetische Wellen bei der Schnurlosübertragung herabgesetzt wird. Ein weiterer wesentlicher Vorteil des erfindungsgemäßen universellen Mobil-Telekommunikationssystems besteht darin, daß durch das erweiterte Schnurlos-Telekommunikationssystem, insbesondere im Pikozellen- und Mikrozellenbereich, die Möglichkeit für Fernsprechen mit höherer Qualität bis hin zum Bildfernsprechen gegeben ist. Dies liegt daran, daß je geringer der Zellenradius einer Kommunikationszelle ist, desto größer ist im allgemeinen die je Flächeneinheit verfügbare Kapazität und damit die nutzbare Bitrate für die jeweilige Anwendung. Das erfindungsgemäße universelle Mobil-Telekommunikationssystem bietet somit im Zuge der Wirkungsspirale für eine universelle Mobil-Telekommunikation mit einer Advanced-Mobility bereits eine einfache Möglichkeit an, zellulare und schnurlose Mobil-Telekommunikationssysteme miteinander zu verbinden. Durch diese Verbindung zwischen den beiden Mobil-Telekommunikationssystemen und der dazu parallelen Entwicklung eines Breitband-ISDN-Kommunikationssystems kann somit ein universelles Mobil-Telekommunikationssystem aufgebaut werden, bei dem ein Telekommunikationsteilnehmer seinen Kommunikationspartner überall erreichen kann (Advanced-Mobility).

Vorteilhafte Weiterbildungen der Erfindung sind in den Unteransprüchen angegeben.

Ein Ausführungsbeispiel der Erfindung wird anhand der Figuren 3 bis 8 erläutert. Es zeigen:
Figur 3 ein auf den Mikrozellenbereich erweitertes Schnurlos-Telekommunikationssystem,
Figur 4 und 5 ein auf den Makrozellenbereich erweitertes Schnurlos-Telekommunikationssystem,
Figur 6 ein auf den Hyperzellenbereich erweitertes Schnurlos-Telekommunikationssystem,
Figur 7 und 8 ein universelles Mobil-Telekommunikationssystem.

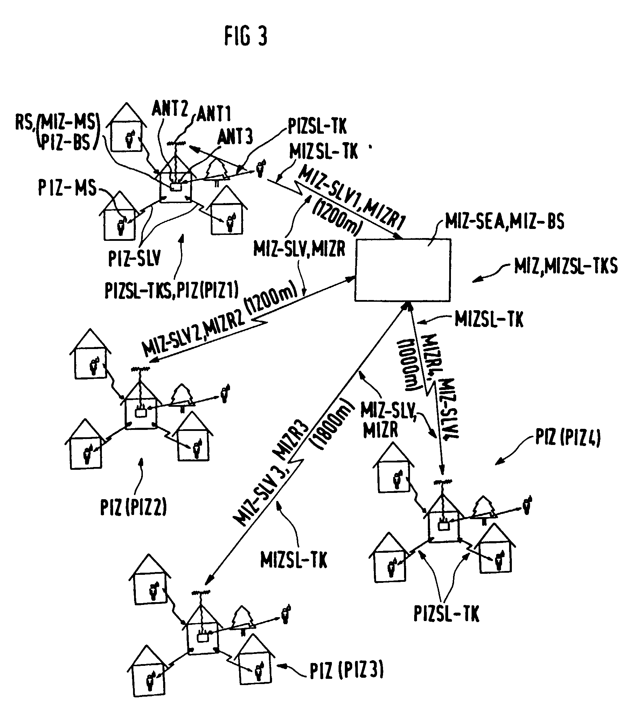

Figur 3 zeigt ein auf eine Mikrozelle MIZ des Mikrozellenbereiches nach Figur 2 erweitertes Schnurlos-Telekommunikationssystem MIZSL-TKS. Die Mikrozelle MIZ ist dabei ein Kommunikationsraum, in dessen Kommunikationszentrum - im Fall der Mikrozelle MIZ - eine mikrozellenindividuelle Sende/Empfangsanordnung MIZ-SEA angeordnet ist. Über diese Sende/Empfangsanordnung MIZ-SEA wird die gesamte mikrozellenindividuelle Schnurlos-Telekommunikation MIZSL-TK abgewickelt. Die Sende-/Empfangsanordnung MIZ-SEA ist dabei z. B. als mikrozellenindividuelle Basisstation MIZ-BS ausgebildet. Für diese erweiterte mikrozellenindividuelle Schnurlos-Telekommunikation MIZSL-TK ist der Sende-/Empfangsanordnung MIZ-SEA mindestens eine Pikozelle PIZ für eine pikozellenindividuelle Schnurlos-Telekommunikation SL-TK nach Figur 2 über jeweils eine mikrozellenindividuelle Schnurlos-Verbindung MIZ-SLV zugeordnet. Die Anzahl der Pikozellen PIZ, die der Sende-/Empfangsanordnung MIZ-SEA über die entsprechende Anzahl der Schnurlos-Verbindungen MIZ-SLV zugeordnet sind, richtet sich insbesondere danach, wie groß die Kommunikationsteilnehmerdichte (Verkehrsdichte) in der Mikrozelle MIZ ist. Bei dünn besiedelten Regionen (Mikrozellen) ist die Anzahl der Pikozellen PIZ eher klein, während bei stark besiedelten Regionen (Mikrozellen) die Anzahl der Pikozellen PIZ mit den dazugehörigen mikrozellenindividuellen Schnurlosverbindungen MIZ-SLV groß ist. Die Anzahl der Pikozellen PIZ ist aber nicht nur von der Kommunikationsteilnehmerdichte abhängig, sondern orientiert sich auch an der in der Sende/Empfangsanordnung MIZ-SEA verfügbaren Übertragungskapazität. Diese Übertragungskapazität wird dabei im wesentlichen durch die Anzahl der Übertragungskanäle bestimmt. So stehen beispielsweise für nach dem DECT-Standard aufgebaute piko- bzw. mikrozellenindividuellen Schnurlos-Telekommunikationssysteme PIZSL-TKS, MIZSL-TKS gegenwärtig maximal zwölf Übertragungskanäle (Halb-Duplex-Übertragungskanäle) zur Verfügung. Für ein auf dem DECT-Standard basierendes mikrozellenindividuelles Schnurlos-Telekommunikationssystem MIZLS-TKS bedeutet dies, daß selbst bei einer großen Kommunikationsteilnehmerdichte in der Mikrozelle MIZ theoretisch nur m mit m = 12 Pikozellen PIZ enthalten sein können. Die Anzahl m ist deshalb theoretisch, weil innerhalb jeder Pikozelle PIZ wiederum die pikozellenindividuelle Schnurlos-Telekommunikation PIZSL-TK stattfindet. Findet diese pikozellenindividuelle Schnurlos-Telekommunikation PIZSL-TK ebenfalls nach dem DECT-Standard statt, so wird sich die Anzahl m mit m = 12 (wie in der Beschreibung des Ausführungsbeispiels später erläutert wird) entsprechend verringern. In dem in der Figur 3 dargestellten mikrozellenindividuellen Schnurlos-Telekommunikationssystem MIZSL-TKS sind beispielsweise m = 4 Pikozellen PIZ (PIZ1...PIZ4) über vier mikrozellenindividuelle Schnurlosverbindungen MIZ-SLV (MIZ-SLV1...MIZ-SLV4) der Sende-/Empfangsanordnung MIZ-SEA zugeordnet. Der maximale Abstand, mit dem diese Pikozellen PIZ1...PIZ4 von der Sende/Empfangsanordnung MIZ-SEA entfernt sein können, bestimmt sich nach dem Mikrozellenradius MIZR, der der Mikrozelle MIZ per Definition zugeordnet wird. Dieser Mikrozellenradius MIZR liegt beispielsweise bei 2000 m. So sind in Figur 3 die Pikozelle PIZ1 über die mikrozellenindividuelle Schnurlos-verbindung MIZ-SLV1 mit einem Mikrozellenradius MIZR1 von z. B. 1200 m, die Pikozelle PIZ2 über die mikrozellenindividuelle Schnurlosverbindung MIZ-SLV2 mit einem Mikrozellenradius MIZR2 von z. B. ebenfalls 1200 m, die Pikozelle PIZ3 über die mikrozellenindividuelle Schnurlosverbindung MIZ-SLV3 mit einem Mikrozellenradius MIZR3 von z. B. 1800 m und die Pikozelle PIZ 4 über die mikrozellenindividuelle Schnurlosverbindung MIZ-SLV4 mit einem Mikrozellenradius MIZR4 von z. B. 1000 m der Sende-/Empfangsanordnung MIZ-SEA zugeordnet. Die Pikozellen PIZ1...PIZ4 sind bis auf die Tatsache, daß sie von der Sende-/Empfangsanordnung MIZ-SEA unterschiedlich entfernt sein können, ansonsten in bezug auf die pikozellenindividuelle Schnurlos-Telekommunikation PIZSL-TK gleich strukturiert. In jeder Pikozelle PIZ ist für die pikozellenindividuelle Schnurlos-Telekommunikation PIZSL-TK im Kommunikationszentrum der Pikozelle PIZ eine Relaisstation RS angeordnet. Die Relaisstation RS weist für die mikrozellenindividuelle Schnurlos-Telekommunikation MIZSL-TK und die pikozellenindividuelle Schnurlos-Telekommunikation PIZSL-TK mehrere Antennen, eine erste Antenne ANT1 für die mikrozellenindividuelle Schnurlos-Telekommunikation MIZSL-TK und beispielsweise zwei zweite Antennen ANT2, ANT3 für die pikozellenindividuelle Schnurlos-Telekommunikation PIZSL-TK, auf. Während die erste Antenne ANT1 für die größere Übertragungsreichweite bei der mikrozellenindividuellen Schnurlos-Telekommunikation MIZSL-TK vorzugsweise als Richtantenne ausgebildet ist, sind die beiden zweiten Antennen ANT2, ANT3 für die pikozellenindividuelle Schnurlos-Telekommunikation PIZSL-TK vorzugsweise als Diversity-Antennen ausgebildet. Bezüglich der beiden Diversity-Antennen ANT2, ANT3 ist die Relaisstation RS entsprechend der in der nachveröffentlichten internationalen Patentanmeldung WO 94/10764 offenbarten technischen Lehre ausgebildet. Über diese Diversity-Antennen ANT2, ANT3 ist die Relaisstation RS mit mindestens einer pikozellenindividuellen Mobilstation PIZ-MS verbunden. Die Verbindung wird dabei für jede Mobilstation PIZ-MS über eine pikozellenindividuelle Schnurlosverbindung PIZ-SLV hergestellt. In dem in der Figur 3 dargestellten erweiterten Schnurlos-Telekommunikationssystem MIZSL-TKS sind in jeder Pikozelle PIZ jeweils n = 4 pikozellenindividuelle Mobilstationen PIZ-MS vorhanden. Für die Anzahl n der Mobilstationen PIZ-MS in Verbindung mit der die pikozellenindividuelle Schnurlos-Telekommunikation PIZSL-TK abwickelnden Relaisstation RS gelten dieselben Bedingungen und Voraussetzungen wie bei der mikrozellenindividuellen Schnurlos-Telekommunikation MIZSL-TK mit der Anzahl m von Pikozellen PIZ in Verbindung mit der die mikrozellenindividuelle Schnurlos-Telekommunikation MIZSL-TK abwickelnden Sende-/Empfangsanordnung MIZ-SEA. Ist demzufolge das pikozellenindividuelle Schnurlos-Telekommunikationssystem PIZSL-TKS wie das mikrozellenindividuelle Schnurlos-Telekommunikationssystem MIZSL-TKS nach dem DECT-Standard aufgebaut, so gilt für die Relaisstation RS, daß diese bezogen auf die zur Verfügung stehende Übertragungskapazität (Anzahl der Übertragungskanäle) insgesamt maximal m + n = 12 pikozellenindividuelle Schnurlos-Telekommunikationsverbindungen zu den umliegenden Mobilstationen PIZ-MS und mikrozellenindividuelle Schnurlos-Telekommunikationsverbindungen zur mikrozellenindividuellen Sende-/Empfangsanordnung MIZ-SEA aufbauen kann. Die für die Relaisstation RS geltende Bedingung m + n = 12 ergibt sich daraus, daß die Relaisstation RS für die mikrozellenindividuelle Schnurlos-Telekommunikation MIZSL-TK als mikrozellenindividuelle Mobilstation MIZ-MS und für die pikozellenindividuelle Schnurlos-Telekommunikation PIZSL-TK als pikozellenindividuelle Basisstation PIZ-BS ausgebildet ist. Die Relaisstation RS muß dabei für die Ausbildung als mikrozellenindividuelle Mobilstation MIZ-MS bei der mikrozellenindividuellen Schnurlos-Telekommunikation MIZSL-TK entsprechend (z. B. bezüglich Sendeleistung, Sendeantenne etc.) ausgelegt sein, um Nachrichten, Informationen bei dem Mikrozellenradius MIZR von bis 2000 m übertragen zu können.

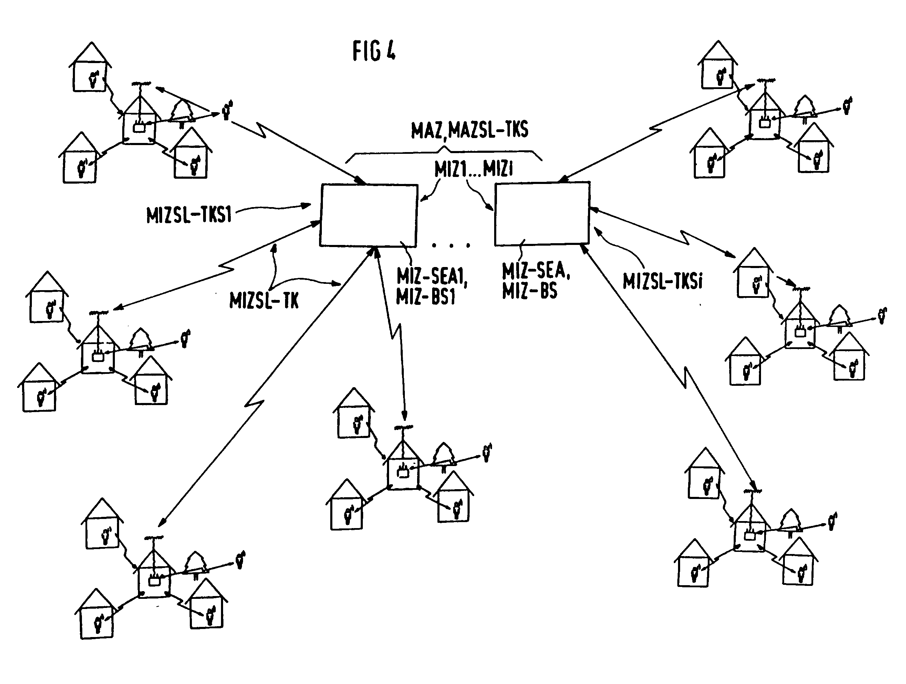

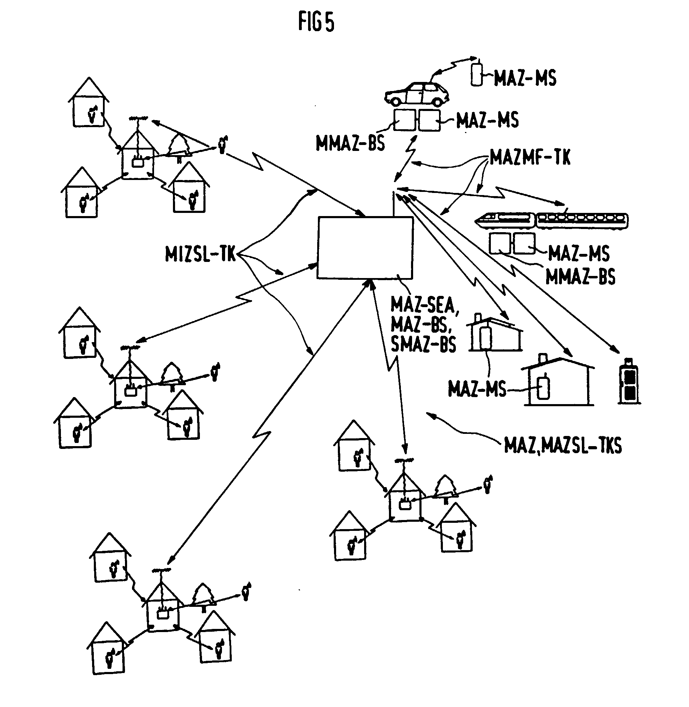

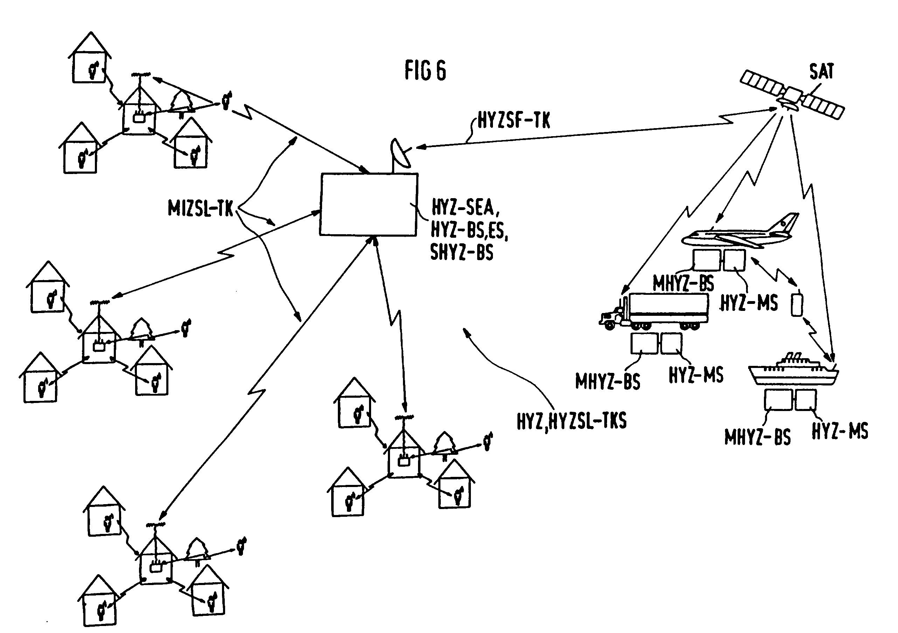

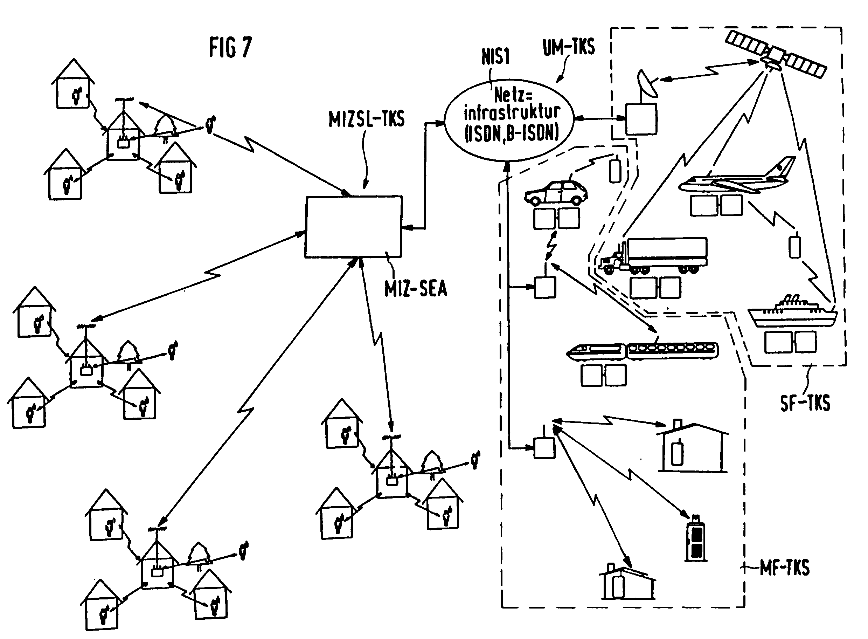

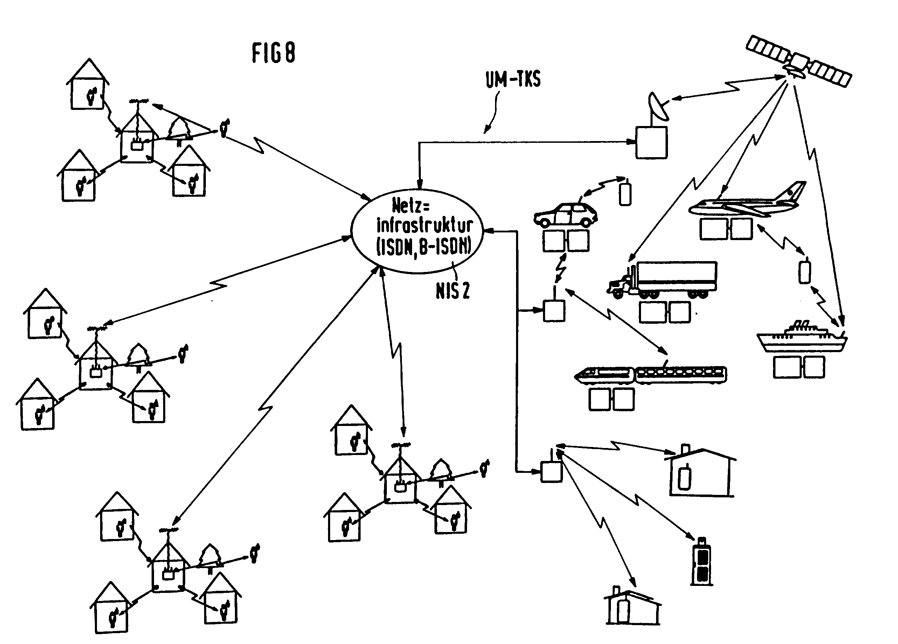

Die Figuren 4 bis 8 zeigen ausgehend von dem in der Figur 3 dargestellten mikrozellenindividuellen Schnurlos-Telekommunikationssystem MIZSL-TKS ein auf mindestens eine Makrozelle MAZ des Makrozellenbereiches nach Figur 2 (Figur 4 und 5), auf mindestens eine Hyperzelle HYZ des Hyperzellenbereiches nach Figur 2 (Figur 6) erweitertes Schnurlos-Telekommunikationssystem sowie zwei universell erweiterbare Schnurlos-Telekommunikationssysteme (Figur 7 und 8).

So ist in der Figur 4 ein makrozellenindividuelles Schnurlos-Telekommunikationssystem MAZSL-TKS dargestellt, bei dem innerhalb einer Makrozelle MAZ des Makrozellenbereiches nach Figur 2 mit Mikrozellen MIZ1...MIZi eine Anzahl i des mikrozellenindividuellen Schnurlos-Telekommunikationssystems MIZSL-TKS nach Figur 3 zur Realisierung einer "Roaming- und/oder Hand Over"-Funktion angeordnet ist. Entsprechend der Anzahl i der mikrozellenindividuellen Schnurlos-Telekommunikationssysteme MIZSL-TKS1...MIZSL-TKSi gibt es in der Makrozelle MAZ eine Anzahl i von mikrozellenindividuellen Sende-/Empfangsanordnungen MIZ-SEA1...MIZ-SEAi, die wiederum z. B. als mikroindividuelle Basisstationen MIZ-BS1...MIZBSi ausgebildet sind und dabei entsprechend dem mikrozellenindividuellen Schnurlos-Telekommunikationssystem MIZSL-TKS nach Figur 3 die mikrozellenindividuelle Schnurlos-Telekommunikation MIZSL-TK mit der jeweiligen Pikozelle PIZ abwickeln. Einer ersten mikrozellenindividuellen Basisstation MIZ-BS1 sind dabei z. B. m = 4 Pikozellen PIZ mit jeweils einer Relaisstation RS und n = 4 pikozellenindividuellen Mobilstationen PIZ-MS zugeordnet, während einer i-ten mikrozellenindividuellen Basisstation MIZ-BSi z. B. m = 3 Pikozellen mit jeweils einer Relaisstation RS und n = 4 pikozellenindividuellen Mobilstationen PIZ-MS zugeordnet sind.

In Figur 5 ist in Abwandlung zu dem makrozellenindividuellen Schnurlos-Telekommunikationssystem MAZSL-TKS nach Figur 4 statt der mikrozellenindividuellen Schnurlos-Telekommunikationssysteme MIZSL-TKS1...MIZSL-TKSi mit den mikrozellenindividuellen Sende-/Empfangsanordnungen MIZ-SEA1...MIZ-SEAi mindetens eine makrozellenindividuelle Sende/Empfangsanordnung MAZ-SEA für die erweiterte Schnurlos-Telekommunikation zuständig. Diese erweiterte Schnurlos-Telekommunikation kann dabei aus der mikrozellenindividuellen Schnurlos-Telekommunikation MIZSL-TK nach Figur 3 oder 4 und einer makrozellenindividuellen Mobilfunk-Telekommunikation MAZMF-TK (gemischtzellenindividuelle Telekommunikation nach Figur 5) oder aber aus einer makrozellenindividuellen Schnurlos-Telekommunikation MAZSL-TK und der makrozellenindividuellen Mobilfunk-Telekommunikation MAZMF-TK (einheitszellenindividuelle Telekommunikation) bestehen. Bei dieser einheitszellenindividuellen Telekommunikation muß die Relaisstation RS nach Figur 3 für die makrozellenindividuelle Schnurlos-Telekommunikation MAZSL-TK entsprechend (z. B. in bezug auf die Sendeleistung, Sendeantenne etc.) ausgelegt sein, um bei der makrozellenindividuellen Schnurlos-Telekommunikation MAZSL-TK als makrozellenindividuelle Mobilstation MAZ-MS dienen zu können.

Die makrozellenindividuelle Sende-/Empfangsanordnung MAZ-SEA übernimmt dabei die Funktion einer makrozellenindividuellen Basisstation MAZ-BS und ist dabei vorzugsweise als Mobilfunk-Basisstation ausgebildet. Während die mikrozellenindividuelle Schnurlos-Telekommunikation MIZSL-TK bei der gemischtzellenindividuellen Telekommunikation analog zu der in dem mikrozellenindividuellen Schnurlos-Telekommunikationssystem MIZSL-TKS nach Figur 3 und 4 abläuft, dient die Sende/Empfangsanordnung MAZ-SEA bei der makrozellenindividuellen Mobilfunk-Telekommunikation MAZMF-TK (gemischt- und einheitszellenindividuelle Telekommunikation) als stationäre makrozellenindividuelle Basisstation SMAZ-BS, die über makrozellenindividuelle Mobilfunkverbindungen MAZ-MFV unmittelbar mit makrozellenindividuellen Mobilstationen MAZ-MS oder mittelbar über mobile makrozellenindividuelle Basisstationen MMAZ-BS mit den Mobilstationen MAZ-MS verbunden ist.

Analog zur Darstellung in der Figur 4 können bei dem makrozellenindividuellen Schnurlos-Telekommunikationssystem MAZSL-TKS nach Figur 5 wiederum mehrere Makrozellen MAZ mit jeweils einer makrozellenindividuellen Sende/Empfangsanordnung MAZ-SEA zur Realisierung der "Roaming- und/oder Hand Over"-Funktion vorgesehen sein.

In Figur 6 ist ein hyperzellenindividuelles Schnurlos-Telekommunikationssystem HYZSL-TKS dargestellt, bei dem in einer Hyperzelle HYZ des Hyperzellenbereiches nach Figur 2 eine hyperzellenindividuelle Sende-/Empfangsanordnung HYZ-SA für die erweiterte Schnurlos-Telekommunikation angeordnet ist. Diese erweiterte Schnurlos-Telekommunikation kann dabei aus der mikrozellenindividuellen Schnurlos-Telekommunikation MIZSL-TK nach Figur 3 oder 4 und einer hyperzellenindividuellen Satellitenfunk-Telekommunikation HYZSF-TK (gemischtzellenindividuelle Telekommunikation nach Figur 6) oder aber aus einer hyperzellenindividuellen Schnurlos-Telekommunikation HYZSL-TK und der hyperzellenindividuellen Satellitenfunk-Telekommunikation HYZSF-TK (einheitszellenindividuelle Telekommunikation) bestehen. Bei dieser einheitszellenindividuellen Telekommunikation muß für die hyperzellenindividuelle Schnurlos-Telekommunikation HYZSL-TK die Relaisstation RS für die Übertragungsreichweiten im Hyperzellenbereich mit dem Hyperzellenradius HYZR von mehreren 100 km entsprechend (z. B. bezüglich der Sendeleistung, Sendeantenne etc.) ausgelegt sein, um bei der hyperzellenindividuellen Schnurlos-Telekommunikation HYZSL-TK als hyperzellenindividuelle Mobilstation HYZ-MS dienen zu können.

Die hyperzellenindividuelle Sende-/Empfangsanordnung HYZ-SEA übernimmt dabei für die gemischt- und einheitszellenindividuelle Telekommunikation die Funktion einer hyperzellenindividuellen Basisstation HYZ-BS und ist dabei vorzugsweise als Erdstation ES ausgebildet. Während die mikrozellenindividuelle Schnurlos-Telekommunikation MIZSL-TK bei der gemischtzellenindividuellen Telekommunikation analog zu der in dem mikrozellenindividuellen Schnurlos-Telekommunikationssystem MIZSL-TKS nach Figur 3 und 4 abläuft, dient die Sende/Empfangsanordnung HYZ-SEA bei der hyperzellenindividuellen Satellitenfunk-Telekommunikation HYZSF-TK (gemischt- und einheitszellenindividuelle Telekommunikation) als stationäre hyperzellenindividuelle Basisstation SHYZ-BS, die über hyperzellenindividuelle Satellitenfunkverbindungen HYZ-SFV und einen auf der geostationären Erdumlaufbahn angeordneten Satelliten SAT mittelbar über mobile hyperzellenindividuelle Basisstationen MHYZ-BS mit hyperzellenindividuellen Mobilstationen HYZ-MS verbunden ist.

Analog zu der Darstellung in der Figur 4 können bei dem hyperzellenindividuellen Schnurlos-Telekommunikationssystem HYZSL-TKS nach Figur 6 wiederum mehrere Hyperzellen HYZ mit jeweils einer hyperzellenindividuellen Sende/Empfangsanordnung HYZ-SEA zur Realisierung der "Roaming- und/oder Hand Over"-Funktion vorgesehen sein.

Figur 7 zeigt ein universelles Mobil-Telekommunikationssystem UM-TKS, bei dem das mikrozellenindividuelle Schnurlos-Telekommunikationssystem MIZSL-TKS nach Figur 3 über eine erste Netzinfrastruktur NIS1 mit dem Mobilfunk-Telekommunikationssystem MF-TKS und/oder mit dem Satellitenfunk-Telekommunikationssystem SF-TKS nach Figur 2 verbunden ist. Über die Netzinfrastruktur NIS1 kann somit eine interzellulare Kommunikationsverbindung aufgebaut werden. Darüber hinaus bietet die Netzinfrastruktur NIS1 die Möglichkeit, über eine Luft-/Leitungsschnittstelle Kommunikationsverbindungen zu leitungsgebundenen Vermittlungsanlagen (EWSD, Nebenstellenanlagen) aufzubauen. Außerdem besteht die Möglichkeit, nicht nur das mikrozellenindividuelle Schnurlos-Telekommunikationssystem MIZSL-TKS nach Figur 3 an die Netzinfrastruktur NIS1 anzuschließen, sondern auch die übrigen erweiterten Schnurlos-Telekommunikationssysteme nach Figur 4 bis 6. In all den genannten Ausführungsformen des universellen Mobil-Telekommunikationssystems UM-TKS kann über die Netzinfrastruktur NIS1 immer eine interzellulare Kommunikationsverbindung aufgebaut werden.

Figur 8 zeigt eine Modifikation des universellen Mobil-Telekommunikationssystems UM-TKS nach Figur 7, die darin besteht, daß für die interzellulare Kommunikationsverbindung eine zweite Netzinfrastruktur NIS2 vorgesehen ist. Diese Netzinfrastruktur NIS2 unterscheidet sich von der ersten Netzinfrastruktur NIS1 nach Figur 7 dadurch, daß die mikrozellenindividuelle Sende-/Empfangsanordnung MIZ-SEA in der Netzinfrastruktur integriert ist. Die Netzinfrastruktur NIS2 bietet darüber hinaus die Möglichkeit, über eine Luft/Leitungsschnittstelle Kommunikationsverbindungen zu leitungsgebundenen Vermittlungsanlagen (EWSD, Nebenstellenanlagen) aufzubauen. Außerdem besteht die Möglichkeit, nicht nur das mikrozellenindividuelle Schnurlos-Telekommunikationssystem MIZSL-TKS nach Figur 3 an die Netzinfrastruktur NIS1 anzuschließen, sondern auch die übrigen erweiterten Schnurlos-Telekommunikationssysteme nach Figur 4 bis 6. In all den genannten Ausführungsformen des universellen Mobil-Telekommunikationssystems UM-TKS kann über die Netzinfrastruktur NIS1 immer eine interzellulare Kommunikationsverbindung aufgebaut werden.

## Patentansprüche

1. Universelles Mobil-Telekommunikationssystem
(a) mit einem erweiterten Schnurlos-Telekommunikationssystem (MIZSL-TKS, MAZSL-TKS, HYZSL-TKS), das
(a1) einen Pikozellenbereich mit mindestens einer Pikozelle (PIZ) und
(a2) einen dem Pikozellenbereich übergeordneten Zellenbereich mit mindestens einer der Pikozelle (PIZ) übergeordneten Zelle (MIZ, MAZ, HYZ) abdeckt,
(b) mit einer der Pikozelle (PIZ) zugeordneten Pikozellen-Mobilstation (PIZ-MS), die mit einer in der Pikozelle (PIZ) enthaltenen Relaisstation (RS) durch Telekommunikation verbindbar ist, wobei
(b1) die Relaisstation (RS) mit einer in der übergeordneten Zelle (MIZ, MAZ, HYZ) enthaltenen Sende/Empfangsanordnung (MIZ-SEA, MIZ-SEA1...MIZ-SEAi, MAZ-SEA, HYZ-SEA, NIS2) durch Telekommunikation verbindbar ist,
**dadurch gekennzeichnet**, daß
(c) der Relaisstation (RS) neben der Funktion der Telekommunikationsverbindung zu der der übergeordneten Zelle (MIZ, MAZ, HYZ) zugeordneten Sende-/Empfangsanordnung (MIZ-SEA, MIZ-SEA1...MIZ-SEAi, MAZ-SEA, HYZ-SEA, NIS2) im Sinne der Bildung eines die Pikozellen-Mobilstation (PIZ-MS) einschließenden, die Pikozelle (PIZ) abdeckenden Schnurlos-Telekommunikationssystems (PIZSL-TKS) auch die Funktion einer Pikozellen-Basisstation (PIZ-BS) zugewiesen ist.

2. Universelles Mobil-Telekommunikationssystem nach Anspruch 1, **dadurch gekennzeichnet**, daß die Relaisstation (RS) mindestens eine erste Sende-/Empfangsantenne (ANT1) für die Telekommunikationsverbindung zu der der übergeordneten Zelle (MIZ, MAZ, HYZ) zugeordneten Sende-/Empfangsanordnung (MIZ-SEA, MIZ-SEA1...MIZ-SEAi, MAZ-SEA, HYZ-SEA, NIS2) und mindestens eine zweite Sende-/Empfangsantenne (ANT2, ANT3) für die Telekommunikationsverbindung zu der Pikozellen-Mobilstation (PIZ-MS) aufweist.

3. Universelles Mobil-Telekommunikationssystem nach Anspruch 2, **dadurch gekennzeichnet**, daß die erste Sende-/Empfangsantenne (ANT1) als Richtantenne ausgebildet ist.

4. Universelles Mobil-Telekommunikationssystem nach Anspruch 2 oder 3, **dadurch gekennzeichnet**, daß zwei zweite Sende/Empfangsantennen (ANT2, ANT3) vorgesehen sind, die als Diversity-Antennen ausgebildet sind.

5. Universelles Mobil-Telekommunikationssystem nach einem der Ansprüche 1 bis 4, **dadurch gekennzeichnet**, daß eine erste Sende-/Empfangsanordnung (MIZ-SEA, MIZ-SEA1...MIZ-SEAi) als eine einer Mikrozelle (MIZ) zugeordnete Schnurlos-Basisstation (MIZ-BS) ausgebildet ist.

6. Universelles Mobil-Telekommunikationssystem nach einem der Ansprüche 1 bis 4, **dadurch gekennzeichnet**, daß eine zweite Sende-/Empfangsanordnung (MAZ-SEA) als eine einer Makrozelle (MAZ) zugeordnete Mobilfunk-Basisstation ausgebildet ist.

7. Universelles Mobil-Telekommunikationssystem nach Anspruch 5, **dadurch gekennzeichnet**, daß die erste Sende/Empfangsanordnung (MIZ-SEA, MIZ-SEA1...MIZ-SEAi) mit einer ersten Vermittlungsanlage (NIS1) verbunden ist.

8. Universelles Mobil-Telekommunikationssystem nach Anspruch 6, **dadurch gekennzeichnet**, daß die zweite Sende-/Empfangsanordnung (MAZ-SEA) mit einer ersten Vermittlungsanlage (NSI1) verbunden ist.

9. Universelles Mobil-Telekommunikationssystem nach einem der Ansprüche 1 bis 4, **dadurch gekennzeichnet**, daß eine dritte Sende-/Empfangsanordnung (NIS2) als eine zweite Vermittlungsanlage (NIS2) mit einer Luft-/Leitungsschnittstelle ausgebildet ist.

10. Universelles Mobil-Telekommunikationssystem nach einem der Ansprüche 7 bis 9, **dadurch gekennzeichnet**, daß die Vermittlungsanlage (NIS1, NIS2) als Nebenstellenanlage ausgebildet ist.

11. Universelles Mobil-Telekommunikationssystem nach einem der Ansprüche 1 bis 4, **dadurch gekennzeichnet**, daß eine vierte Sende-/Empfangsanordnung (HYZ-SEA) als Satellitenfunk-Telekommunikationssystem (SF-TKS) mit einem auf einer geostationären Erdumlaufbahn angeordneten Satelliten (SAT) und einer Erdfunkstation (HYZ-BS, MES, ES) ausgebildet ist.

12. Universelles Mobil-Telekommunikationssystem nach einem der Ansprüche 1 bis 11, **dadurch gekennzeichnet**, daß das Schnurlos-Telekommunikationssystem (PIZSL-TKS) und ein erstes erweitertes Schnurlos-Telekommunikationssystem (MIZSL-TKS) als DECT-System aufgebaut sind.

13. Universelles Mobil-Telekommunikationssystem nach einem der Ansprüche 1 bis 11, **dadurch gekennzeichnet**, daß das Schnurlos-Telekommunikationssystem (PIZSL-TKS) als DECT-System und ein zweites erweitertes Schnurlos-Telekommunikationssystem (MAZSL-TKS) als Schnurlos/Mobilfunk-System aufgebaut ist.

14. Universelles Mobil-Telekommunikationssystem nach einem der Ansprüche 1 bis 13, **dadurch gekennzeichnet**, daß das Schnurlos-Telekommunikationssystem (PIZSL-TKS) und das erweiterte Schnurlos-Telekommunikationssystem (MIZSL-TKS, MAZSL-TKS, HYZSL-TKS) als Bildtelefonie-System aufgebaut sind.

## Claims

1. Universal mobile telecommunications system
(a) having an expanded cordless telecommunications system (MIZSL-TKS, MAZSL-TKS, HYZSL-TKS), which
(a1) covers a picocell range with at least one picocell (PIZ) and
(a2) a cell range of higher order than the picocell range, with at least one cell (MIZ, MAZ, HYZ) of a higher order than the picocell (PIZ),
(b) having a picocell mobile station (PIZ-MS) which is assigned to the picocell (PIZ) and can be connected by telecommunications to a relay station (RS) contained in the picocell (PIZ),
(b1) the relay station (RS) being adapted such that it can be connected by telecommunications to a transmitting/receiving arrangement (MIZ-SEA, MIZ-SEA1...MIZ-SEAi, MAZ-SEA, HYZ-SEA, NIS2) contained in the higher-order cell (MIZ, MAZ, HYZ),
characterized in that
(c) the relay station (RS) is allocated not only the function of telecommunications connection to the transmitting/receiving arrangement (MIZ-SEA, MIZ-SEA1...MIZ-SEAi, MAZ-SEA, HYZ-SEA, NIS2) assigned to the higher-order cell (MIZ, MAZ, HYZ), for the purpose of forming a cordless telecommunications system (PIZSL-TKS) including the picocell mobile station (PIZ-MS) and covering the picocell (PIZ), but also the function of a picocell base station (PIZ-BS).

2. Universal mobile telecommunications system according to Claim 1, characterized in that the relay station (RS) has at least one first transmitting/receiving antenna (ANTl) for the telecommunications connection to the transmitting/receiving arrangement (MIZ-SEA, MIZ-SEA1...MIZ-SEAi, MAZ-SEA, HYZ-SEA, NIS2) assigned to the higher-order cell (MIZ, MAZ, HYZ) and at least one second transmitting/receiving antenna (ANT2, ANT3) for the telecommunications connection to the picocell mobile station (PIZ-MS).

3. Universal mobile telecommunications system according to Claim 2, characterized in that the first transmitting/receiving antenna (ANTl) is designed as a directional antenna.

4. Universal mobile telecommunications system according to Claim 2 or 3, characterized in that there are provided two second transmitting/receiving antennas (ANT2, ANT3), which are designed as diversity antennas.

5. Universal mobile telecommunications system according to one of Claims 1 to 4, characterized in that a first transmitting/receiving arrangement (MIZ-SEA, MIZ-SEA1...MIZ-SEAi) is designed as a cordless base station (MIZ-BS) assigned to a microcell (MIZ).

6. Universal mobile telecommunications system according to one of Claims 1 to 4, characterized in that a second transmitting/receiving arrangement (MAZ-SEA) is designed as a mobile radio base station assigned to a macrocell (MAZ).

7. Universal mobile telecommmunications system according to Claim 5, characterized in that the first transmitting/receiving arrangement (MIZ-SEA, MIZ-SEA1...MIZ-SEAi) is connected to a first switching system (NIS1).

8. Universal mobile telecommunications system according to Claim 6, characterized in that the second transmitting/receiving arrangement (MAZ-SEA) is connected to a first switching system (NIS1).

9. Universal mobile telecommunications system according to one of Claims 1 to 4, characterized in that a third transmitting/receiving arrangement (NIS2) is designed as a second switching system (NIS2) with an air/line interface.

10. Universal mobile telecommunications system according to one of Claims 7 to 9, characterized in that the switching system (NIS1, NIS2) is designed as a private branch exchange.

11. Universal mobile telecommunications system according to one of Claims 1 to 4, characterized in that a fourth transmitting/receiving arrangement (HYZ-SEA) is designed as a satellite radio telecommunications system (SF-TKS) with a satellite (SAT), arranged in geostationary earth orbit, and an earth station (HYZ-BS, MES, ES).

12. Universal mobile telecommunications system according to one of Claims 1 to 11, characterized in that the cordless telecommunications system (PIZSL-TKS) and a first expanded cordless telecommunications system (MIZSL-TKS) are set up as a DECT system.

13. Universal mobile telecommunications system according to one of Claims 1 to 11, characterized in that the cordless telecommunications system (PIZSL-TKS) is set up as a DECT system and a second expanded cordless telecommunications system (MAZSL-TKS) is set up as a cordless/mobile radio system.

14. Universal mobile telecommunications system according to one of Claims 1 to 13, characterized in that the cordless telecommunications system (PIZSL-TKS) and the expanded cordless telecommunications system (MIZSL-TKS, MAZSL-TKS, HYZSL-TKS) are set up as a videotelephony system.

## Revendications

1. Système de télécommunication mobile universel
(a) comportant un système de télécommunication sans fil étendu (MIZSL-TKS, MAZSL-TKS, HYZSL-TKS),
(a1) qui couvre un domaine de picocellules ayant au moins une picocellule (PIZ) et
(a2) qui couvre un domaine de cellules de rang supérieur au domaine de picocellules et ayant au moins une cellule (MIZ, MAZ, HYZ) de rang supérieur à la picocellule (PIZ),
(b) avec une station mobile de picocellule (PIZ-MS) qui est associée à la picocellule (PIZ) et qui peut être reliée par télécommunication à une station de relais (RS) contenue dans la picocellule (PIZ),
(b1) la station de relais (RS) pouvant être reliée par télécommunication à un dispositif émetteur récepteur (MIZ-SEA, MIZ-SEA1 à MIZ-SEAi, MAZ-SEA, HYZ-SEA, NIS2) contenu dans la cellule (MIZ, MAZ, HYZ) de rang supérieur,
caractérisé par le fait que
(c) en plus de la fonction de liaison de télécommunication vers le dispositif émetteur récepteur (MIZ-SEA, MIZ-SEAI à MIZ-SEAi, MAZ-SEA, HYZ-SEA, NIS2), associé à la cellule (MIZ, MAZ, HYZ) de rang supérieur, en vue de la formation d'un système de télécommunication sans fil (PIZSL-TKS) incluant la station mobile de picocellule (PIZ-MS) et couvrant la picocellule (PIZ), la station de relais (RS) a aussi la fonction d'une station de base de picocellule (PIZ-BS).

2. Système de télécommunication mobile universel selon la revendication 1, caractérisé par le fait que la station de relais (RS) comporte au moins une première antenne émettrice réceptrice (ANT1) pour la liaison de télécommunication vers le dispositif émetteur récepteur (MIZ-SEA, MIZ-SEA1 à MIZ-SEAi, MAZ-SEA, HYZ-SEA, NIS2), associé à la cellule (MIZ, MAZ, HYZ) de rang supérieur, et au moins une seconde antenne émettrice réceptrice (ANT2, ANT3) pour la liaison de télécommunication vers la station mobile de picocellule (PIZ-MS).

3. Système de télécommunication mobile universel selon la revendication 2, caractérisé par le fait que la première antenne émettrice réceptrice (ANT1) est conçue comme une antenne directive.

4. Système de télécommunication mobile universel selon la revendication 2 ou 3, caractérisé par le fait qu'il est prévu deux secondes antennes émettrices réceptrices (ANT2, ANT3) qui sont conçues comme des antennes en diversité.

5. Système de télécommunication mobile universel selon l'une des revendications 1 à 4, caractérisé par le fait qu'un premier dispositif émetteur récepteur (MIZ-SEA, MIZ-SEA1 à MIZ-SEAi) est conçu comme une station de base sans fil (MIZ-BS) associée à une microcellule (MIZ).

6. Système de télécommunication mobile universel selon l'une des revendications 1 à 4, caractérisé par le fait qu'un deuxième dispositif émetteur récepteur (MAZ-SEA) est conçu comme une station de base radio mobile associée à une macrocellule (MAZ).

7. Système de télécommunication mobile universel selon la revendication 5, caractérisé par le fait que le premier dispositif émetteur récepteur (MIZ-SEA, MIZ-SEA1 à MIZ-SEAi) est relié à un premier central de commutation (NIS1).

8. Système de télécommunication mobile universel selon la revendication 6, caractérisé par le fait que le deuxième dispositif émetteur récepteur (MAZ-SEA) est relié à un premier central de commutation (NSI1).

9. Système de télécommunication mobile universel selon l'une des revendications 1 à 4, caractérisé par le fait qu'un troisième dispositif émetteur récepteur (NIS2) est conçu comme un deuxième central de commutation (NIS2) avec une interface radio/câble.

10. Système de télécommunication mobile universel selon l'une des revendications 7 à 9, caractérisé par le fait que le central de commutation (NIS1, NIS2) est conçu comme un central privé.

11. Système de télécommunication mobile universel selon l'une des revendications 1 à 4, caractérisé par le fait qu'un quatrième dispositif émetteur récepteur (HYZ-SEA) est conçu comme un système de télécommunication radio par satellite (SF-TKS) avec un satellite (SAT) placé en orbite géostationnaire et avec une station radio terrestre (HYZ-BS, MES, ES).

12. Système de télécommunication mobile universel selon l'une des revendications 1 à 11, caractérisé par le fait que le système de télécommunication sans fil (PIZSL-TKS) et un premier système de télécommunication sans fil étendu (MIZSL-TKS) sont conçus comme des systèmes DECT.

13. Système de télécommunication mobile universel selon l'une des revendications 1 à 11, caractérisé par le fait que le système de télécommunication sans fil (PIZSL-TKS) est conçu comme un système DECT et un deuxième système de télécommunication sans fil étendu (MAZSL-TKS) est conçu comme un système de radiocommunication mobile sans fil.

14. Système de télécommunication mobile universel selon l'une des revendications 1 à 13, caractérisé par le fait que le système de télécommunication sans fil (PIZSL-TKS) et le système de télécommunication sans fil étendu (MIZSL-TKS, MAZSL-TKS, HYZSL-TKS) sont conçus comme des systèmes de vidéophonie.
